# EUROPEAN PATENT APPLICATION

(11) **EP 4 165 981 A1**
(43) Date of publication of application: **19.04.2023**
(21) Application number: 22199671.3
(22) Date of filing: 04.10.2022
(51) Int. Cl.: A01F 15/07, A01B 69/00, A01F 15/08

(54) **SQUARE BALER-WRAPPER COMBINATION**

(30) Priority: 14.10.2021 GB 202114671
(71) Applicant: Kuhn-Geldrop B.V., 5667 KP Geldrop (NL)
(72) Inventor: van Hooijdonk, Alexander, Cornelius, NL-5571BN Bergeijk (NL); van Amstel, Leonardus, Hedrikus, Maria, NL-6553 RW Geldrop (NL)
(74) Representative: Murgitroyd & Company

(57) **Abstract**

A baler-wrapper combination comprises a square baler and a bale wrapper, which are configurable in a working configuration in which the square baler is towed behind a tractor and the bale wrapper is towed behind the square baler. The square baler is configured to make a bale and deposit the bale on a ground surface, and the bale wrapper is configured to take up the bale from the ground surface and wrap the bale while the baler-wrapper combination is in motion over the ground surface.

## Description

The present invention relates to a square baler-wrapper combination comprising a square baler combined with a bale wrapper.

It is known from the prior art to combine a square baler (a baler that makes bales of parallelopiped shape, also called square bales) with a bale wrapper, either integrated on one frame e.g. EP 2796033 or as a combination of a trailed baler and a trailed wrapper in which the combination is provided with transport means to receive a bale from the baler and transport this bale to the wrapper, e.g. NL 2001334 C2.

Especially, the transporting of the bale from the baler to the wrapper can be a problem when the baler and wrapper are not aligned, for example when the baler and the wrapper are following a curved path. From NL 2001334 C2 it is known to provide an intermediate conveyer that takes up a bale from the baler while in line with the baler compression channel, and when the bale is out of the channel the intermediate conveyer is pivoted so that it is aligned with the wrapper and the bale is then transported further to the wrapper.

A disadvantage of the integrated square baler-wrapper in which the baler and the wrapper are mounted on one frame is that the machine is heavy and long. A disadvantage of the integrated baler wrapper as well as the combination comprising a trailed combination with an intermediate transport device is that the baler and wrapper cannot be easily separated and used as two separate machines without modifications or adding extra devices. The possibility of using the baler and the wrapper separately is important because there are circumstances when the output capacity of the baler (for example measured in bales per hour) is higher than the input capacity of the wrapper. In this situation the capacity of the wrapper will dictate the overall capacity of the combination and it may be more economical to use the baler and wrapper machines separately with separate tractors and drivers to get the optimal output capacity of both machines.

It is an object of the present invention to provide a baler-wrapper combination that mitigates one or more of the drawbacks of the prior art square baler-wrapper combinations.

According to one aspect of the invention there is provided a baler-wrapper combination as defined by the claims.

In one embodiment of the invention there is provided a baler-wrapper combination comprising a square baler and a bale wrapper, wherein the square baler and the bale wrapper are configurable in a first configuration in which the square baler is towed behind a tractor and the bale wrapper is towed behind the square baler, wherein the square baler is configured to make a bale and deposit the bale on a ground surface, and the bale wrapper is configured to take up the bale from the ground surface and wrap the bale, and wherein the baler-wrapper combination is configured to deposit the bale on a ground surface and take up the bale from the ground surface while the baler-wrapper combination is in motion over the ground surface.

A baler-wrapper combination according to the present invention is able to transfer a bale from the square baler to the bale wrapper by (i) depositing the bale from the square baler onto the ground surface, and (ii) taking up the bale from the ground surface by the bale wrapper. This avoids the need for an intermediate conveyor to transfer the bale from the square baler to the bale wrapper, thus simplifying the machine.

Optionally, the wrapper is configured to be independently operable, substantially without modification, to take up a bale from the ground surface and wrap the bale while not towed behind the square baler. This allows the bale wrapper to be used separately from the square baler without significant modification.

Optionally, the square baler is configured to be independently operable, substantially without modification, to make a bale and deposit the bale on a ground surface. This allows the square baler to be used separately from the bale wrapper without significant modification.

Optionally, the square baler is configured to deposit the bale on a ground surface in front of the bale wrapper, and subsequently the bale wrapper is configured to take up the bale from the ground surface when it reaches the position of the bale on the ground surface.

Optionally, the baler-wrapper combination includes a steering mechanism, wherein the steering mechanism is configured to control the path of the bale wrapper so that it follows the drop off position of the square baler as the baler-wrapper combination moves over the ground surface.

Optionally, the steering mechanism includes a first sensor that senses a turning angle between the square baler and the bale wrapper, a second sensor that senses a drawbar angle between a drawbar and a frame of the bale wrapper, a drawbar actuator that sets the drawbar angle, and a controller that controls operation of the drawbar actuator according to the sensed turning angle and the sensed drawbar angle.

Optionally, the steering mechanism includes a mechanical and/or hydraulic steering element that directly controls a drawbar angle between a drawbar and a frame of the bale wrapper, wherein the steering mechanism includes a steering actuator adjacent a tow pivot between the square baler and the bale wrapper, wherein the steering actuator is connected to a drawbar actuator between a drawbar and a frame of the bale wrapper, and wherein the steering actuator is configured to change the length of the drawbar actuator. This enables steering of the bale wrapper without changing the length of the actuator between the drawbar and the frame.

Optionally, the square baler and the bale wrapper are configurable in a transport configuration in which the square baler is towed behind a tractor and the bale wrapper is towed behind the square baler, wherein the baler-wrapper combination has an overall length that is shorter, preferably by at least 1m, in the transport configuration than the working configuration. This enables the baler-wrapper combination to be driven more easily along narrow lanes and public roads and/or ensures compliance with traffic regulations.

Optionally, the baler-wrapper combination further comprises a tow connection between the square baler and the bale wrapper, wherein the tow connection comprises at least a vertical pivot that is located adjacent to a centre line L of the baler-wrapper combination in the transport configuration and is displaced laterally away from the centre line L when the baler-wrapper combination is in the working configuration so that it does not interfere with a bale held on the bale chute or deposited on the ground.

Optionally, the square baler comprises a bale holder comprising a bale chute for temporarily holding a bale before depositing the bale on the ground surface and a holding device for controlling movement of the bale along the bale chute. The bale holder may be configured to hold a bale on the bale chute when the bale wrapper is not ready to receive the bale, for example if it is still wrapping or holding a bale and/or when the baler and the wrapper are not suitably positioned for transferring a bale, for example when the combination is going round a curve.

Optionally, the bale chute comprises at least one roller and the holding device comprises a braking device that is operable to prevent or reduce rotation of the roller.

Optionally, the bale holder comprises a controller configured to control holding and/or ejection of a bale by the bale holder.

Optionally, the holding device comprises a bale retaining device configured to engage or disengage a bale on the bale chute.

Optionally, the holding device is mounted on the bale wrapper and operated by the bale wrapper.

Optionally, the bale holder comprises a sensor for sensing that a bale on the bale chute is ready for depositing on the ground surface. Optionally, the sensor may be mounted on the bale wrapper and configured to deliver a sensor signal to the wrapper control system. Optionally, the bale retaining device and the sensor are combined in a single device: e.g. the sensor may sense a force applied to the bale retaining device by the bale. Optionally, the controller may indicate to an operator that a bale is ready to be deposited on the ground surface.

Optionally, the controller is configured to indicate a desired driving speed of the tractor when depositing the bale on a ground surface and/or taking up the bale from the ground surface and/or wherein the controller is configured to control the driving speed of the tractor when depositing the bale on a ground surface and/or taking up the bale from the ground surface. This may be useful for example to prevent the speed exceeding a predetermined maximum.

Optionally, the baler-wrapper combination further comprises a support element (mention in statement of invention: for example a caster wheel or a skid) adjacent a tow connection between the square baler and the bale wrapper that is configured to maintain the tow connection at least at a determined minimum height above the ground surface. The determined height could be a constant height or a minimum height. The support element could be for example a castor wheel or a skid that only engages the ground at the minimum specified height. The tow connection/pivot connection may be relatively far behind the baler to prevent instability of the bale wrapper and/or the possibility of hitting the ground.

Optionally, the baler-wrapper combination further comprises an extendable element in a tow connection between the square baler and the bale wrapper that can be extended or retracted to adjust an overall length of the baler-wrapper combination. The extendable element may for example comprise hinged or telescopic elements, to allow reduced length in transport configuration.

Optionally, the baler-wrapper combination further comprises a resilient element in a tow connection between the square baler and the bale wrapper. This may allow the tow connection to absorb transient shock loads when picking up a bale from the ground.

Optionally, the baler-wrapper combination includes a steering mechanism, wherein the steering mechanism is configured to control the path of the bale wrapper so that it follows the drop off position of the square baler as the baler-wrapper combination moves over the ground surface.

Certain embodiments of the invention will now be described by way of example with reference to the accompanying drawings, in which:
Figure 1 is a top view showing a first embodiment of the baler-wrapper combination in a transport configuration;
Figure 2 shows the first embodiment of the baler-wrapper combination in a working configuration;
Figure 3 is a top view showing a second embodiment of the baler-wrapper combination in a transport configuration;
Figure 4 shows the second embodiment of the baler-wrapper combination in a working configuration;
Figure 5 shows a third embodiment of the baler-wrapper combination while travelling along a straight path;
Figure 6 shows the third embodiment of the baler-wrapper combination while travelling along a curved path;
Figure 7 shows the bale wrapper of the first embodiment in a stand-alone configuration, without the associated baler;
Figures 8 and 9 are top views showing two variants of a drawbar mechanism in the first baler-wrapper combination;

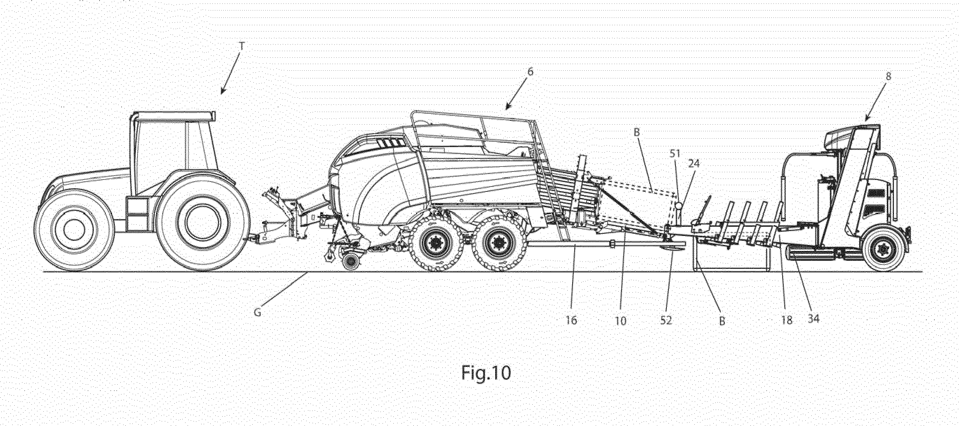

Figure 10 is a side view of the first baler-wrapper combination in a working configuration; and
Figure 11 is another side view of the first baler-wrapper combination, showing schematically a control system of the baler-wrapper combination.

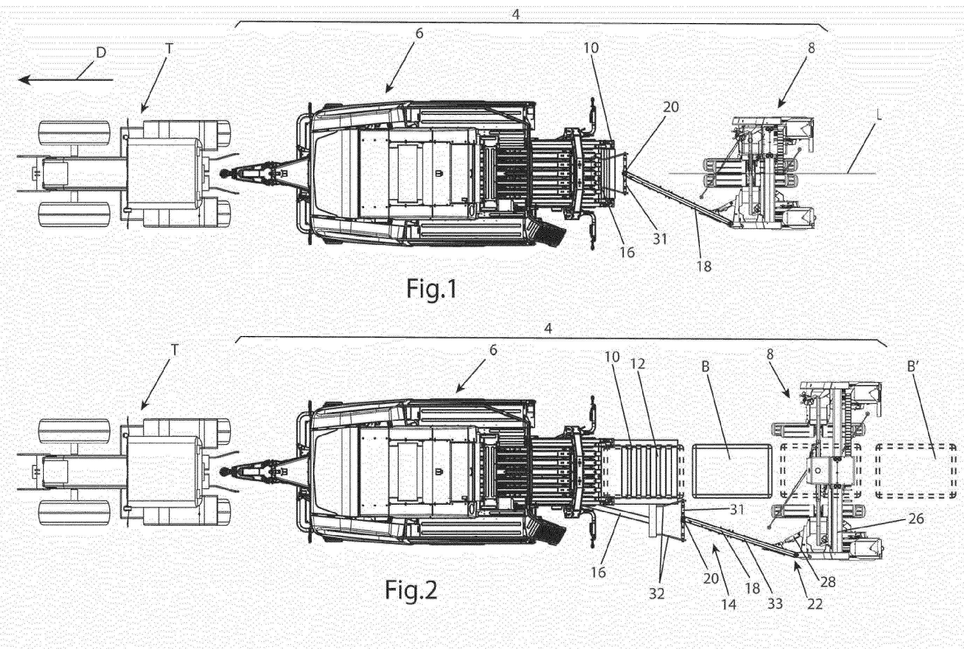

Figure 1 shows a baler wrapper combination 4 comprising a square baler 6 (or "baler") and a bale wrapper 8 (or "wrapper"). The baler wrapper combination 4 is configured to be towed in a driving direction D behind a tractor T, which does not form an essential part of the invention. The baler 6 is largely conventional and is configured to make parallelepiped (or "square") bales B, which are ejected from the rear end of the baler 6 after they have been completed.

The baler 6 includes a bale chute 10 that extends from the rear end of the baler that can hold a completed bale or deposit it on the ground surface. The bale chute typically comprises a ramp that can be inclined downwards towards the ground when in a working condition as shown in figure 2, or pivoted upwards to a vertical position as shown in figure 1 when the baler 6 is in a transport configuration, for example when it is being driven down a public road. The bale chute 10 typically comprises a plurality of rotatable rolls 12 that allow a completed bale B to move over the surface of the chute. One or more of the rolls 12 may optionally be driven and/or braked to control the movement of the bale along the bale chute 10, so that the bale can be either deposited on the ground surface or held temporarily on the bale chute 10.

As depicted in figures 1 and 2, the baler 6 is configured to be towed in the driving direction D directly behind the tractor T, and the wrapper 8 is configured to be towed behind the baler 6.

A connection 14 in the form of a draw bar is provided between the baler 6 and the wrapper 8 allowing the wrapper 8 to be towed behind the baler 6. In the embodiment shown in figures 1 and 2 the connection 14 includes a tow bar structure 16 that is connected to the baler 6 and a draw bar structure 18 that is connected to the wrapper 8, the tow bar and draw bar structures 16,18 being connected to one another through a pivot joint 20 that allows rotation of the draw bar 18 relative to the tow bar 16 about at least a vertical axis (and optionally one or more other orthogonal axes).

The tow bar 16 is pivotable relative to the square baler 6 between a transport position shown in Fig. 1 in which the pivot joint 20 is located adjacent to a centre line L of the baler-wrapper combination 4 and a working position shown in Fig. 2 in which the pivot joint 20 is displaced laterally away from the centre line L so that it does not obstruct a bale B on the chute 10 or on the ground. When the tow bar 16 moves from the transport position to the working position the angle of the draw bar 18 is also adjusted by means of an actuator 28 between the draw bar and the frame of the bale wrapper so that the bale wrapper 8 remains behind the square baler 6.

The length of the tow bar 16 is adjustable lengthwise between a transport length shown in figure 1 and a working length shown in figure 2, where the working length is greater than the transport length. For example, the working length may typically be greater than the transport length by between 1m and 2m, typically about 1.5m. This allows the lengthwise separation of the baler 6 and the wrapper 8 to be increased in the working configuration and decreased in the transport configuration, for easier transportation.

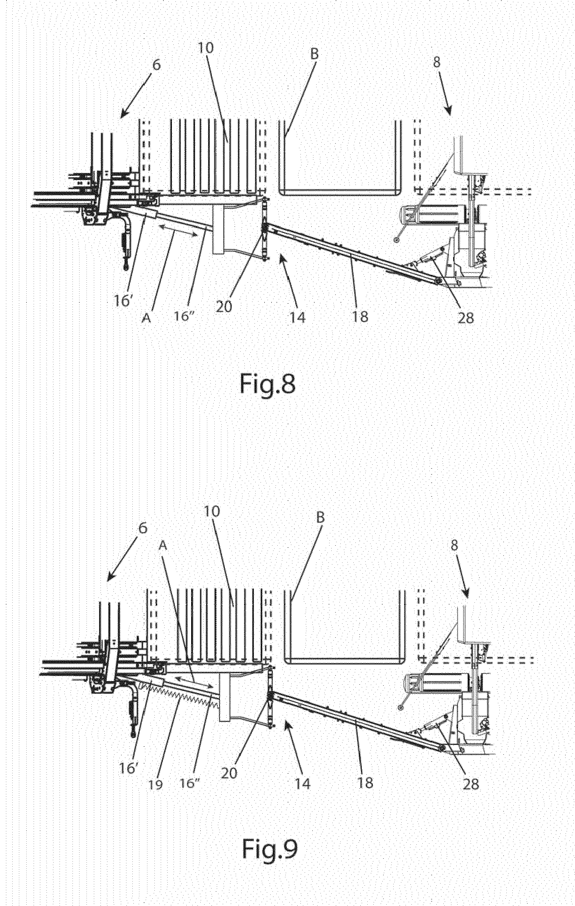

In a first variant of the first baler-wrapper combination illustrated in Fig. 8, the tow bar 16 comprises two telescopically-linked tow bar sections, comprising a leading tow bar section 16' and a following tow bar section 16" that is telescopically adjustable lengthwise in the direction of arrow A relative to the first tow bar section 16'. An actuator (not shown), for example a hydraulic or electric actuator, may optionally be provided to adjust the length of the tow bar 16. Alternatively, the length of the tow bar 16 may be manually adjustable.

In a second variant illustrated in Fig. 9, a resilient component 19, for example a mechanical or pneumatic spring, is added to oppose lengthwise extension of the two telescopically-linked tow bar sections, 16' and 16" in the direction of arrow A. The resilient component 19 allows limited extension of the tow bar 16 when it is subjected to tensile forces, for example when the bale wrapper 8 picks up a stationary bale B from the ground, thereby reducing transient forces transmitted through the connection 14.

The tow draw bar structure 16 is optionally also adjusted laterally, i.e. in a direction transverse to the longitudinal axis L of the baler wrapper combination, between a central position on the longitudinal axis L when in the transport configuration as shown in figure 1 and a laterally displaced position to one side of the longitudinal axis L when in a working configuration as shown in figure 2.

In this embodiment the tow bar structure 16 of the baler 6 includes at its rear end a pair of rearwardly-extending link arms 32. The draw bar structure 18 of the wrapper 8 includes at its front end a crossbar 31 that is connected via pivot connections at each of its ends to the rear ends of the link arms 32, allowing the crossbar 31 to rotate about its longitudinal axis. The draw bar structure 18 also includes a drawbar 33 that is connected to the crossbar 31 via the pivot joint 20. Alternatively the connection between baler 6 and wrapper 8 could include a tow bar with a standard hitch and a drawbar with a standard hitch eye.

The bale wrapper 8 includes a pick-up mechanism 34 for picking up a bale from the ground surface G after it has been deposited on the ground surface G by the square baler 6. The pick-up mechanism 34 may for example comprise one or more sets of retractable driven rollers, for example of the type described in EP 3160222 B.

During operation of the baler wrapper combination 4, a bale B is made by the baler 6 and then deposited from the bale chute 10 onto the ground. Subsequently, when the bale wrapper reaches the position of the bale on the ground, the bale can be picked up from the ground by the pick-up mechanism 34 of the wrapper 8 and then wrapped with a stretch wrapping material. The steps of depositing the bale on the ground from the square baler 6 and subsequently picking the bale up from the ground by the bale wrapper 8 can be performed while the baler-wrapper combination 4 is in continuous motion: i.e. without coming to a halt at any point, thus increasing the efficiency of operation. It is noted, in passing, that round balers cannot generally deposit a round bale on a ground surface while the baler is in motion over the ground surface.

Operation of the wrapper 8 to wrap the bale is conventional and therefore will not be described in detail. Once the bale has been wrapped, the wrapped bale B' is deposited by the wrapper 8 on the ground for later collection.

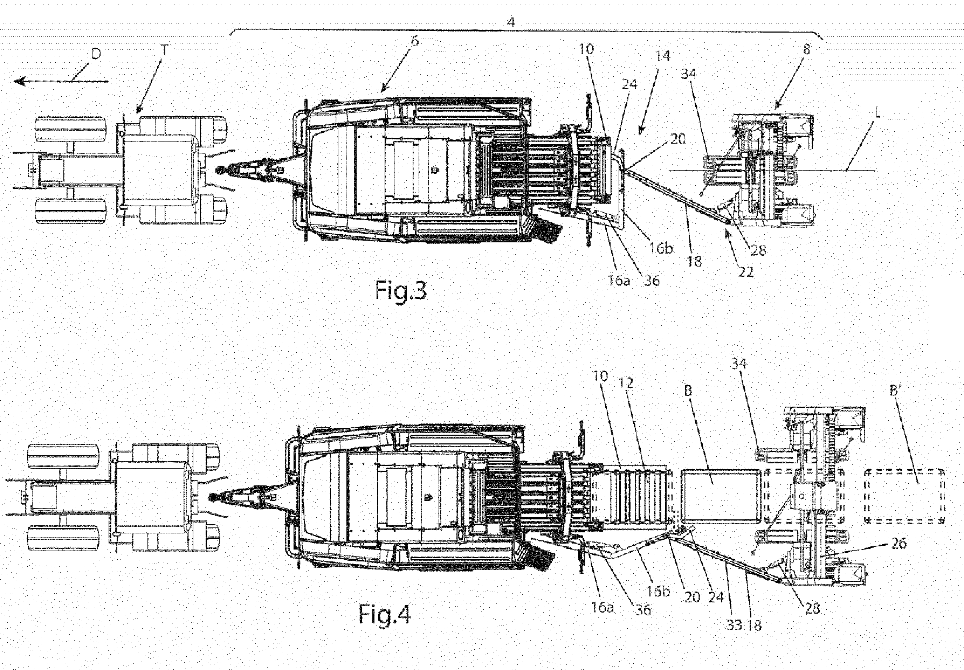

Figures 3 and 4 illustrate a second embodiment of the baler-wrapper combination 4 in transport and working configurations. The second embodiment is similar to the first embodiment described above except that the tow bar structure 16 of the connection 14 comprises a pair of pivot arms 16a, 16b that fold between the transport configuration shown in figure 3 and the working configuration shown in figure 4. An actuator 36, for example a hydraulic or electric actuator, may be provided to control folding of the pivot arms 16a, 16b. Operation of the baler wrapper combination forming the second embodiment is substantially similar to operation of the first embodiment described above.

When the baler-wrapper combination 4 is in transport position shown in Fig. 3 the pivot joint 20 is located adjacent to a centre line L of the baler-wrapper combination 4. When the baler-wrapper combination 4 is in the working position shown in Fig. 4 the pivot joint 20 is displaced laterally away from the centre line L so that it does not obstruct a bale B on the chute 10 or on the ground. When the tow bar 16 moves from the transport position to the working position the angle of the draw bar 18 is also adjusted by means of an actuator 28 between the draw bar and the frame 26 of the bale wrapper so that the bale wrapper 8 remains behind the square baler 6.

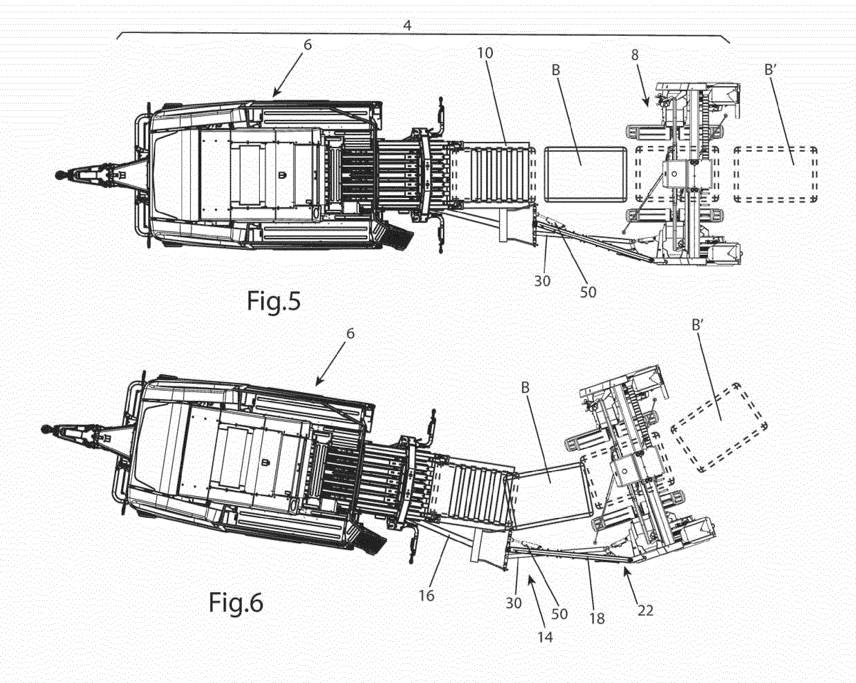

Figures 5 and 6 illustrate a third embodiment of the baler-wrapper combination 4 that includes a steering control mechanism 22 for steering the bale wrapper 8 so that it follows the path of the baler 6 over the ground. Preferably, the bale wrapper 8 follows the path of the output end of the bale chute 10 and thus the position at which the bale is deposited by the baler on the ground. In this embodiment the path following function is achieved by providing a mechanical steering rod 30 that directly changes the angle between the drawbar 18 and the frame 26 of the bale wrapper 8, without changing the length of the actuator between drawbar and frame.

Figures 5 and 6 illustrate the baler-wrapper combination 4 when it is travelling along a straight path (figure 5) and a curved path (figure 6). When the baler wrapper combination is travelling in a straight path as shown in figure 5 the wrapper 8 is positioned directly behind the baler 6 and it is therefore able to pick up a bale B from the ground once it reaches the position of the bale in order to wrap the bale. The wrapped bale B' is then deposited on the ground by the wrapper 8 for later collection.

When the baler wrapper combination 4 is travelling around a curved path as shown in figure 6, the wrapper 8 no longer follows in line behind the baler and the path of the wrapper 8 over the ground therefore has to be controlled to ensure that the pickup 34 of the wrapper will follow the position where the bale B is deposited on the ground by the baler 6. This may be achieved for example by controlling the steering of the wrapper 8 via the steering control mechanism 22 that forms part of the draw bar structure 18. This allows the wrapper 8 to pick up a bale B from the ground, wrap the bale and then deposit the wrapped bale B' on the ground.

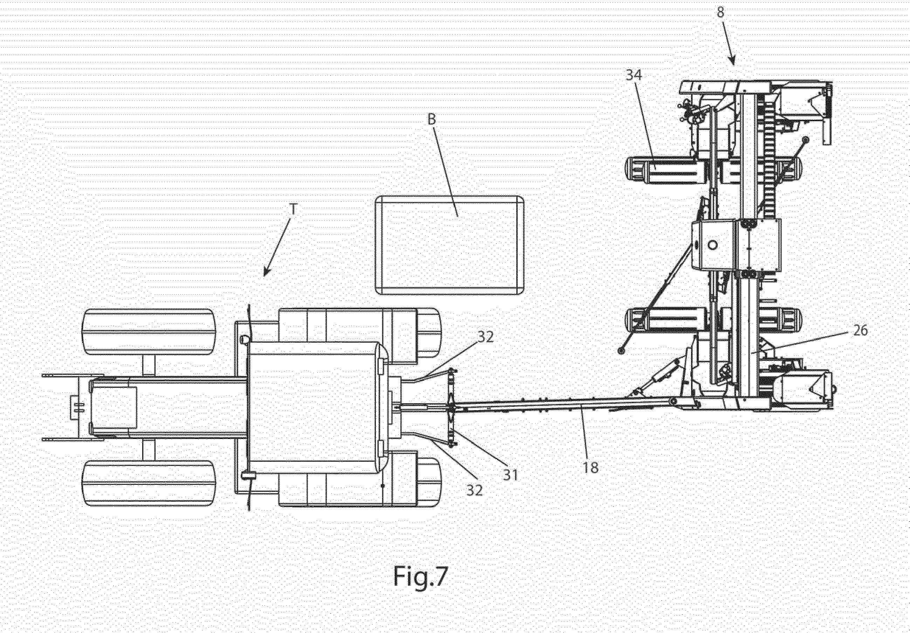

The baler 6 and the wrapper 8 are preferably separable and optionally the wrapper 8 and/or the baler 6 are configured so that they can be operated separately from one another. For example, as shown in figure 7, the wrapper 8 may be connected directly to a tractor T so that it can be used to wrap bales B that have been made previously by a baler and deposited on the ground. Similarly, the square baler 6 may be connected directly to a tractor T without the bale wrapper 8 so that it can be used to make bales and deposit the bales on the ground for later collection and optional wrapping.

Optionally the distance between baler 6 and the wrapper 8 is adjustable to provide a baler-wrapper combination that is substantially shorter when in transport (as shown in Figs. 1 & 3) than when working on the field (as shown in Figs. 2 & 4). This may provide an overall transport length of tractor T and the baler-wrapper combination 4 that is within 18.75m while the length of the tractor and baler-wrapper combination in the field is substantially bigger, for example, at least 50cm and typically 1-2m bigger. The connection 14 between the baler and the wrapper preferably includes an extendible part, which is preferably provided on the baler part 16 of the combination, and may for example be located before a vertical pivot connection 20 between baler and wrapper. Preferably the distance between baler 6 and the wrapper 8 can be extended by about 1.5 m from the transport position to the working position. The extension could for example be achieved by shifting elements for example as illustrated in Fig. 8 or pivoting elements for example as illustrated in Figs. 3 & 4.

Optionally, for example as illustrated in Fig. 9, the drawbar structure 18 and/or the towbar structure 16 might be extendible under a resilient suspension so that it can extend in length when the bale B is picked up from the ground. Picking up the bale B from the ground, when in the wrapper is in motion, will exert forces on the wrapper 8 owing to the inertia of the bale, as the bale has to be put in motion. By allowing limited extension of the drawbar structure 18 and/or the towbar structure 16 the inertial forces transmitted through the connection 14 can be reduced during the picking up of the bale B, as the wrapper 8 is able to stand still or slow down relative to the ground while the baler 6 continues to travel forward. After picking up the bale B the towbar or drawbar structure will retract to its normal length.

The resilient suspension in the towbar structure 16 could also be used for enabling the bale B to move to the rear when the holding device 24 is preventing a bale from falling off the bale chute 10.

Optionally the tow connection 14 between baler and the wrapper includes a pivot joint 20 with at least a vertical pivot axis, which lies on or close to the center line L of the towable baler-wrapper combination 4 when it is in the transport position (Figs. 1 & 3). Optionally, the pivot joint 20 of the tow connection is situated outside of the center line as to provide clearance for the transport of the bale when the baler-wrapper combination 4 is in the working position (Figs. 2 & 4). This may be beneficial to avoid obstructing the bale channel/chute 10, which is generally centrally positioned.

Optionally the baler-wrapper combination 4 may be configured such that the bale is dropped from the baler 6 onto the ground surface G and subsequently picked up from the ground surface G by the wrapper 8 when the wrapper 8 reaches the bale due to the movement of the baler-wrapper combination 4 over the ground.

Optionally the baler 6 may be configured to selectively retard or prevent the bale from sliding from the bale chute 10 when leaving from the channel of the baler. This is to create a buffer, which may be useful for example to avoid dropping/transporting the bale while the baler-wrapper combination is negotiating a curve, or to avoid dropping the wrapped bale at an inconvenient spot, or when the wrapper 8 is not ready to receive a next bale. The baler-wrapper combination may thus be configured to hold the bale on the bale chute or to release the bale so that it can slide down the bale chute.

Optionally this retarding of the bale to prevent it from sliding off the bale chute 10 is achieved by blocking or retarding at least one of the rollers 12 to prevent or reduce rotation of the roller, preferably including the last roller in the bale chute, either:
when the wrapper is not ready to accept the bale (for example, when it has not yet finished with the wrapping or dropping off of the previous finished bale) and/or
when the wrapper is not able to follow the drop-off position of the bale (when driving around a tight curve).

Optionally the one or more rollers 12 in the bale chute can be driven for forcing the bale actively from the bale chute 10.

Optionally this blocking of the dropping off or actively driving the bale from the bale chute is controlled by a controller.

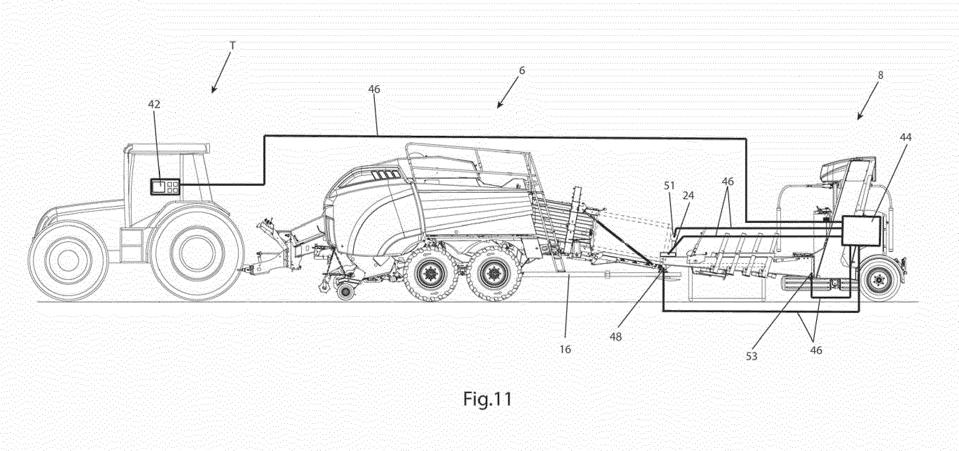

An exemplary control system 40 of the baler-wrapper combination 4 is illustrated in Fig. 11. The control system 40 includes an operator interface 42 that may generally be mounted in the cab of the tractor T. Typically, the operator interface 42 comprises a display and input unit that displays certain operating conditions of the baler 6 and/or the bale wrapper 8 and allows the human operator to control operation of the baler-wrapper combination 4.

The control system 40 may also include a wrapper control system 44, which is connected to the operator interface 42 via a connection 46 that enables sensor signals and control signals to be transmitted between the wrapper control system 44 and the operator interface 42. The connection 46 may be an electrical, wireless or other connection.

The wrapper control system 44 may be connected via a further connection 46 to an angle sensor 48 associated with the pivot joint 20 between the tow bar 16 and the drawbar 18. The angle sensor 48 is configured to sense the relative angle between the tow bar 16 and the drawbar 18, which is indicative of various configurative states of the baler-wrapper combination 4, for example whether the combination is in an operating configuration or a transport configuration, whether the baler 6 and the wrapper are in line with one another and whether a bale B made by the baler 6 and held on the bale chute 10 is ready for release onto the ground surface G.

The wrapper control system 44 may also be connected via a further connection 46 to the bale sensor 51, which may for example be mounted on the front end of the draw bar 18 and configured to sense a bale B on the bale chute 10. For example, the bale sensor 51 may be associated with or mounted on the bale retainer 24.

The wrapper control system 44 may also be connected via a further connection 46 to the bale retainer 24, to control operation thereof.

Optionally the blocking/retarding of the bale is done by a mechanical bale retainer / holding device 24, either as an alternative or in addition to blocking/braking the rollers. Preferably the retainer device is mounted on the wrapper 8 and configured to be controlled by the wrapper control system 44, so that it will not obstruct the depositing of the bale when the baler is used independently without the wrapper, and will not interfere with the loading of a bale when the wrapper is used directly behind a tractor, without the baler.

Optionally a bale sensor 51, for example a pressure sensor, is provided to sense if a bale is ready to be dropped off from the bale chute 10. Preferably this bale sensor 51 is mounted on the wrapper 8 and configured to deliver a sensor signal to the wrapper control system 44.

Optionally the bale retainer device 24 and the bale sensor 51 are combined in one device. For example, the bale sensor 51 may be configured to sense a force applied to the retainer 24 by a bale.

Optionally the control system 40 is configured to indicate to an operator that a bale is ready for drop off.

Optionally the control system 40 is configured to instruct the tractor, for example via a TIM (Tractor Implement Management) system to go to a driving speed that allows the wrapped bale to be dropped off by the baler and to be picked up by the wrapper at an allowed speed, which does not exceed a predetermined speed.

Optionally the control system 40 is configured to inform the operator, for example via the operator interface 42, to go to a driving speed that allows the wrapped bale to be dropped off and to be picked up at an allowed speed.

Optionally the wrapper 8 has a steering system that is configured to control the path of the picking up device 34 of the wrapper so that it substantially follows the path of the drop off position of the bale from the chute 10. This ensures that the picking up device 34 is able to pick up a bale while the combination is travelling in a curved path.

Optionally the path following function of the picking up device can be achieved by providing a sensor 48 on the pivot 20 that senses the turning angle between baler and wrapper and a sensor 53 that senses the angle between wrapper drawbar 18 and wrapper frame 26 and a controller, for example wrapper control system 44, that controls an actuator 28 that sets the angle between the drawbar 18 and the frame 26 of the wrapper.

Optionally the path following function can be achieved by a direct mechanical steering rod 30 that directly changes the angle between the drawbar 18 and the frame 26, without changing the length of the actuator 28 between drawbar and frame.

Alternatively, the path following function can be achieved by providing an optional actuator 50 besides the 'tow' pivot that is in direct connection to the actuator 28 between frame and drawbar, which is configured to change the length of the actuator 28 between drawbar and frame to provide the required path following function.

Optionally the width of the wrapper 8 is adjustable, so that when the combination is in a transport configuration as shown in Fig. 1 the width of the wrapper 8 can be substantially smaller than the width of the baler 6 so as to ensure that wrapper will follow within a path defined by the outer sides of the baler when travelling in a curved path (compare Figs. 1 & 2). When the combination is in a working configuration as shown in Fig. 2 the width of the wrapper 8 can be increased to enable the wrapper 8 to pick up and wrap a bale B.

Optionally near the (at least vertical) pivot connection 20 between the baler 6 and the wrapper 8 there is provided with a support 52 that maintains the pivot connection 20 at a constant height and/or at least a minimal height above the ground surface G. The support 52 may for example comprise a caster wheel or a skid that only engages the ground surface when the distance to the surface is less than a set value. The pivot connection 20 and the support 52 may be relatively far behind the baler 6 to prevent the possibility that the amplitude of vertical movement of the hitch could make the wrapper 8 unstable (for example, tipping up and down) or could make it hit the ground surface.

## Claims

1. A baler-wrapper combination comprising a square baler and a bale wrapper, wherein the square baler and the bale wrapper are configurable in a working configuration in which the square baler is towed behind a tractor and the bale wrapper is towed behind the square baler, wherein the square baler is configured to make a bale and deposit the bale on a ground surface, and the bale wrapper is configured to take up the bale from the ground surface and wrap the bale, and wherein the baler-wrapper combination is configured to deposit the bale on a ground surface and take up the bale from the ground surface while the baler-wrapper combination is in motion over the ground surface.

2. A baler-wrapper combination according to claim 1, wherein the bale wrapper is configured to be independently operable, without modification, to take up a bale from the ground surface and wrap the bale while not towed behind the square baler and wherein the square baler is configured to be independently operable, without modification, to make a bale and deposit the bale on a ground surface.

3. A baler-wrapper combination according to any preceding claim, wherein the square baler is configured to deposit the bale on a ground surface in front of the bale wrapper, and subsequently the bale wrapper is configured to take up the bale from the ground surface when it reaches the position of the bale on the ground surface.

4. A baler-wrapper combination according to any preceding claim, wherein the baler-wrapper combination includes a steering mechanism, wherein the steering mechanism is configured to control the path of the bale wrapper so that it follows the drop off position of the square baler as the baler-wrapper combination moves over the ground surface.

5. A baler-wrapper combination according to claim 4, wherein the steering mechanism includes a first sensor that senses a turning angle between the square baler and the bale wrapper, a second sensor that senses a drawbar angle between a drawbar and a frame of the bale wrapper, a drawbar actuator that sets the drawbar angle, and a controller that controls operation of the drawbar actuator according to the sensed turning angle and the sensed drawbar angle.

6. A baler-wrapper combination according to claim 4, wherein the steering mechanism includes a mechanical and/or hydraulic steering element that directly controls a drawbar angle between a drawbar and a frame of the bale wrapper, wherein the steering mechanism includes a steering actuator adjacent a tow pivot between the square baler and the bale wrapper, wherein the steering actuator is connected to a drawbar actuator between a drawbar and a frame of the bale wrapper, and wherein the steering actuator is configured to change the length of the drawbar actuator.

7. A baler-wrapper combination according to any preceding claim, wherein the square baler and the bale wrapper are configurable in a transport configuration in which the square baler is towed behind a tractor and the bale wrapper is towed behind the square baler, wherein the baler-wrapper combination has an overall length that is shorter, preferably by at least 1m, in the transport configuration than the working configuration.

8. A baler-wrapper combination according to claim 7, further comprising a tow connection between the square baler and the bale wrapper, wherein the tow connection comprises at least a vertical pivot that is located adjacent to a centre line L of the baler-wrapper combination in the transport configuration and is displaced laterally away from the centre line L when the baler-wrapper combination is in the working configuration.

9. A baler-wrapper combination according to any preceding claim, wherein the square baler comprises a bale holder comprising a bale chute for temporarily holding a bale before depositing the bale on the ground surface and a holding device for controlling movement of the bale along the bale chute.

10. A baler-wrapper combination according to claim 9, wherein the bale chute comprises at least one roller and wherein the holding device comprises a braking device that is operable to prevent or reduce rotation of the roller.

11. A baler-wrapper combination according to any one of claims 9 to 10, wherein the bale holder comprises a controller configured to control holding and/or ejection of a bale by the bale holder.

12. A baler-wrapper combination according to claim 9, wherein the holding device comprises a bale retaining device configured to engage or disengage a bale on the bale chute.

13. A baler-wrapper combination according to claim 12, wherein the holding device is mounted on the bale wrapper and operated by the bale wrapper.

14. A baler-wrapper combination according to any one of claims 9 to 12, wherein the baler- wrapper combination, preferably the bale holder, comprises a sensor for sensing that a bale on the bale chute is ready for depositing on the ground surface.

15. A baler-wrapper combination according to claim 14, wherein the controller is configured to indicate a desired driving speed of the tractor when depositing the bale on a ground surface and/or taking up the bale from the ground surface and/or wherein the controller is configured to control the driving speed of the tractor when depositing the bale on a ground surface and/or taking up the bale from the ground surface.

16. A baler-wrapper combination according to any preceding claim, further comprising a support element adjacent a tow connection between the square baler and the bale wrapper that is configured to maintain the tow connection at least at a determined minimum height above the ground surface.

17. A baler-wrapper combination according to any preceding claim, further comprising an extendable element in a tow connection between the square baler and the bale wrapper that can be extended or retracted to adjust an overall length of the baler-wrapper combination.

18. A baler-wrapper combination according to any preceding claim, further comprising a resilient element in a tow connection between the square baler and the bale wrapper.
